(19) Europäisches Patentamt
European Patent Office
Office européen des brevets

(11) **EP 2 824 004 A1**

(12) **EUROPEAN PATENT APPLICATION**
published in accordance with Art. 153(4) EPC

(43) Date of publication:
**14.01.2015 Bulletin 2015/03**

(51) Int Cl.:
***B60T 8/1755*** *(2006.01)*

(21) Application number: **13757915.7**

(86) International application number:
**PCT/JP2013/056454**

(22) Date of filing: **08.03.2013**

(87) International publication number:
**WO 2013/133410 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.03.2012 JP 2012052411**

(71) Applicant: **Nissan Motor Co., Ltd
Yokohama-shi, Kanagawa 221-0023 (JP)**

(72) Inventors:
• **KUJUBU Naoteru
Atsugi-shi
Kanagawa 243-0123 (JP)**
• **CHIBA Kotaro
Atsugi-shi
Kanagawa 243-0123 (JP)**

(74) Representative: **Hoefer & Partner
Pilgersheimer Straße 20
81543 München (DE)**

(54) **YAW MOMENT CONTROL DEVICE FOR VEHICLE**

(57) In the vehicle yaw moment control device of the present invention, a brake force difference on left and right vehicle wheels is increased along with an increase in steered angle speed and steered angle acceleration, and when a decrease in steered angle speed is detected, a predetermined brake force is applied to a vehicle wheel to which brake force had not been applied.

[FIG. 15]

## Description

### Technological Field

The present invention relates to a yaw moment control device for applying a yaw moment in order to control the yaw movement of a vehicle.

### Background Technology

The technology in Patent Document 1 is disclosed as a technology for controlling vehicle yaw movement. In this publication, the higher a steered angle speed or a steered angle acceleration, the greater a yaw moment controlled variable is applied in order to suppress phase lag in vehicle yaw movement relative to steering operation. Specifically, a brake force difference corresponding to the yaw moment controlled variable is created in the left and right wheels to apply a yaw moment.

### Prior Art Documents

### Patent Documents

Patent Document 1: Japanese Laid-Open Patent Application No. 2001-80491

### Disclosure of the Invention

### Problems to Be Solved by the Invention

However, when yaw moment control is ended, there has been the risk that continuity in the vehicle behavior in the left and right directions will be disrupted when the brake force generated by the yaw moment control is reduced. Specifically, the faster the steered angle speed and the greater the yaw moment controlled variable, the greater the change in deceleration accompanying the reduction in brake force at the end of control and the greater the rebound to vehicle behavior, and there has been a risk of worsening the ride quality.
The present invention focuses on the above problem, it being an object of the invention to provide a vehicle yaw moment control device capable of controlling yaw movement of a vehicle without worsening the ride quality.

### Means Used to Solve the Above-Mentioned Problems

In order to achieve the above objective, in the vehicle yaw moment control device of the present invention, the brake force difference in the left and right vehicle wheels is increased along with the increase in the steered angle speed and the steered angle acceleration, and when a decrease in the steered angle speed is detected, a predetermined brake force is applied to the vehicle wheel to which brake force had not been applied.

### Effect of the Invention

Consequently, when the brake force difference from yaw moment control decreases, sudden changes in the deceleration of the vehicle can be suppressed, and worsening of the ride quality can be avoided by stabilizing the vehicle behavior.

### Brief Description of the Drawings

[FIG. 1] Brake fluid pressure • electric system diagram showing an outline of a vehicle brake force control device to which the vehicle yaw moment control device of Embodiment 1 is applied.
[FIG. 2] Control block diagram depicting the brake force control process performed in the control unit of Embodiment 1.
[FIG. 3] Flowchart depicting yaw moment controlled variable calculation process of Embodiment 1.
[FIG. 4] Flowchart depicting the control gain setting process used in the yaw moment controlled variable calculation of Embodiment 1.
[FIG. 5] Flowchart depicting the control gain setting process used in the yaw moment controlled variable calculation of Embodiment 1.
[FIG. 6] Gain map depicting control gain relative to vehicle speed in Embodiment 1.
[FIG. 7] Map depicting relationship of coefficients relative to steering state in Embodiment 1.
[FIG. 8] Map depicting relationship of coefficient to road surface friction coefficient in Embodiment 1.
[FIG. 9] Map depicting relationship of coefficient to transverse acceleration in Embodiment 1.
[FIG. 10] Map depicting relationship of coefficient to longitudinal deceleration in Embodiment 1.
[FIG. 11] Map depicting relationship of coefficient to brake operation state in Embodiment 1.
[FIG. 12] Flowchart depicting, from the brake force control process of Embodiment 1, the contents of the deceleration limiting process in particular.
[FIG. 13] Flowchart depicting, from the brake force control process of Embodiment 1, the contents of the deceleration limiting process in particular.
[FIG. 14] Time chart depicting yaw moment control process in a case in which the driver steers to the left and then returns from a steer-holding state to the neutral position.
[FIG. 15] Time chart depicting yaw moment control process in a case in which the driver steers to the left and then returns from a steer-holding state to the neutral position.

### Description of Symbols

| 1 | Brake pedal |
| 2 | Booster |
| 3 | Reservoir |
| 4 | Master cylinder |
| 5 | Motor |
| 6, 7 | Pumps |
| 8, 9 | Reservoirs |
| 14 | Steered angle sensor |
| 17 | Control unit |
| 21 | Yaw moment controlled variable calculator |
| 22 | Yaw moment deceleration conversion part |
| 23 | Target deceleration calculator |
| 24 | Yaw moment deceleration arbitration part |

**Preferred Embodiments of the Invention**

[Embodiment 1]

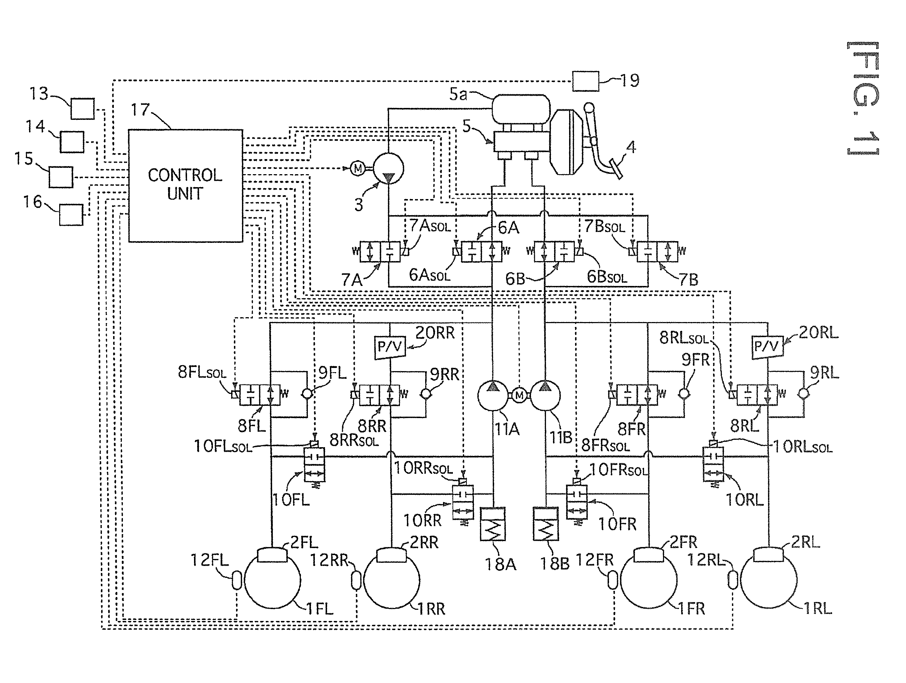

FIG. 1 is a brake fluid pressure • electric system diagram showing an outline of a vehicle brake force control device to which the vehicle yaw moment control device of the present invention is applied. The symbols 1FL and 1RR in the diagram indicate the front left wheel and the right rear wheel respectively, and the symbols 1FR and 1RL indicate the front right wheel and the rear left wheel respectively. Attached to the vehicle wheels 1FL to 1RR are respectively corresponding wheel cylinders 2FL to 2RR as braking cylinders. The wheel cylinders 2FL to 2RR are so-called disc brakes that brake by pressing a pad against a disc rotor.

A master cylinder 5 generates dual-system master cylinder pressure in accordance with the pressing of a brake pedal 4. The connecting structure of the wheel cylinders 2FL to 2RR is a piping system referred to as the diagonal split piping or X piping, in which the front left wheel cylinder 2FL and the rear right wheel cylinder 2RR are connected to one system of the master cylinder 5, and the front right wheel cylinder 2FR and the rear left wheel cylinder 2RL are connected to the other system. Proportioning valves 20RL, 20RR are interposed between the rear left and -right wheel cylinders 2RL, 2RR and the master cylinder 5. These proportioning valves 20RL, 20RR are intended particularly to make the rate of increase of brake force on the rear wheels less than that of the front wheels in order to bringing the front wheel brake force distribution nearer to the so-called ideal brake force distribution, in response to changes in the wheel loads during braking, and past existing valves can be used. Proportioning valves need not be included, and the configuration is not particularly limited.

A master cylinder continuation valve 6A, 6B for establishing continuation between the master cylinder 5 and the wheel cylinders 2FL, 2RR or 2FR, 2RL is installed in each master cylinder pressure system of the master cylinder 5. A booster pump 3 is individually provided for pressurizing brake fluid in a master cylinder reservoir 5a, and the discharge pressure of the booster pump 3 is divided in two and merged with the dual-system master cylinder pressures from the master cylinder 5 on the downstream sides of the master cylinder continuation valves 6A, 6B, i.e. on the sides near the wheel cylinders 2FL to 2RR. The boost pump continuation valves 7A, 7B are installed between the merging points and the booster pump 3.

One system of the master cylinder 5 or one system branched from the booster pump 3 is regarded as one system of a brake fluid pressure source, and corresponding boost control valves 8FL, 8RR or 8FR, 8RL are installed on the respective upstream sides of the wheel cylinders 2FL, 2RR or 2FR, 2RL connected to the system. These boost control valves 8FL, 8RR or 8FR, 8RL have check valves 9FL, 9RR or 9FR, 9RL in the respective bypass channels, and when the pressing of the brake pedal is released, the brake fluid in the wheel cylinders 2FL, 2RR or 2FR, 2RL is quickly reduced to the master cylinder 5 side.

The discharge sides of individual depressurizing pumps 11A, 11B are respectively connected to the respective systems of the brake fluid pressure source, and depressurization control valves 10FL, 10RR or 10FR, 10RL are installed between the intake sides of the depressurizing pumps and the wheel cylinders 2FL, 2RR or 2FR, 2RL. The two depressurizing pumps 11A, 11B both use the same pump motor. Reservoirs 18A, 18B for preventing interference are connected between the depressurization control valves 10FL, 10RR or 10FR, 10RL and the depressurizing pumps 11A, 11B.

These pressure control valves are two-position switching valves switched by drive signals from a control unit, described hereinafter. As a failsafe, for example, the master cylinder continuation valves 6A, 6B are normally open, the boost pump continuation valves 7A, 7B are normally closed, the boost control valves 8FL, 8RR or 8FR, 8RL are normally open, and the depressurization control valves 10FL, 10RR or 10FR, 10RL are normally closed, and when solenoids 6Asol, 6Bsol, 7Asol, 7Bsol, 8FLsol, 8RRsol, 8FRsol, 8RLsol, 10FLsol, 10RRsol, 10FRsol, and 10RLsol are excited by drive signals, the valves are switched to the opposite open or closed states. The booster pump 3 and the depressurizing pumps 11A, 11B are also drivably controlled by drive signals from the control unit.

In this brake fluid pressure circuit, when the brake fluid pressure of the wheel cylinders 2FL to 2RR (referred to below as wheel cylinder pressure as well) is increased during the controlling of brake force in order to perform yaw moment control described hereinafter, the booster pump 3 is driven with the master cylinder continuation valves 6A, 6B in an open state and the boost pump continuation valves 7A, 7B in a closed state, for example, and the created pressure is used to control open the depressurization control valves 10FL to 10RR and discharge the brake fluid in the wheel cylinders 2FL to 2RR.

The opening control of the boost control valves 8FL to 8RR and the depressurization control valves 10FL to 10RR is described hereinafter. To reduce the counterforce on the brake pedal 4, the master cylinder continuation valves 6A, 6B may be opened when the brake pedal 4 is pressed. Increasing the brake force and increasing the brake fluid pressure (the wheel cylinder pressure) have the same meaning, as do reducing the brake force and reducing the brake fluid pressure (the wheel cylinder pressure), and these are therefore treated synonymously hereinafter.

To detect vehicle wheel velocity (referred to below as vehicle wheel speed as well) equivalent to the rotational speed of the vehicle wheels, vehicle wheel speed sensors 12FL to 12RR for outputting a limit signal corresponding to the vehicle wheel speed are attached to the vehicle wheels 1 FL to 1RR, as shown in FIG. 1. Also attached to the vehicle are a yaw rate sensor 13 for detecting the actual yaw rate $d\phi$ occurring in the vehicle, a steered angle sensor 14 for detecting the steering angle of the steering wheel, an acceleration sensor 15 for detecting lateral acceleration and longitudinal acceleration occurring in the vehicle, a master cylinder pressure sensor 16 for detecting the dual-system master cylinder pressure PMC, a brake stroke sensor 19 for detecting the pressed state of the brake pedal 4 as necessary to detect the brake pedal stroke $\eta$, and the like; and detection signals of the sensors and switches are all inputted to a control unit 17 described hereinafter.

The actual yaw rate $d\phi$ from the yaw rate sensor 13 and the steered angle $\theta$ from the steered angle sensor 14 have equal positive and negative directionality, for example, and the two are set so that the angle when the steering wheel is turned to the right and the right-turning yaw rate that occurs at the time have consistent directionality; in the present embodiment, the two are set so that the steered angle $\theta$ is greater than 0 and the yaw rate $d\phi$ is greater than zero during a left turn. The brake pedal stroke $\eta$ from the brake stroke sensor 19 is a theoretical value "0" indicating an OFF state when the brake pedal is not being pressed, for example, and is a digital signal that increases stepwise along with the increase in brake pedal stroke.

The control unit 17 comprises a microcomputer for inputting detection signals from the previously described sensors and switches and outputting control signals to the switching valves, and a drive circuit for converting the control signals outputted from this microcomputer to drive signals for the control valve solenoids composed of electromagnetic switching valves or the like such as those previously described. The microcomputer comprises an input interface circuit having an A/D conversion function, an output interface circuit having a D/A conversion function or the like, a calculation processing device composed of a microprocessor unit MPU or the like, and a storage device composed of ROM, RAM, and the like. Reference short-wave control signals of pulse-width-modulated digital data are outputted from the microcomputer, and the drive circuits are configured as circuits that merely convert these signals to drive signals suitable for activating the actuators and amplify the drive signals. The microcomputer not only creates and outputs important control signals necessary to various controls such as those previously described, but also, in parallel, creates and outputs drive control signals for the depressurizing pumps needed for depressurization control within vehicle behavior control for example, control signals for actuator relay switch elements that govern the power source supply to the actuators themselves, and the like.

(Configuration of brake force control)

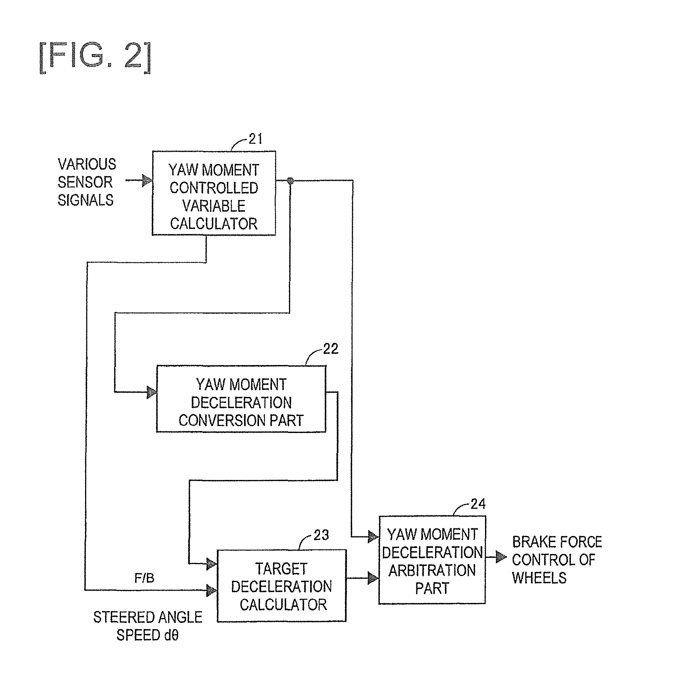

FIG. 2 is a control block diagram depicting the brake force control process performed in the control unit of Embodiment 1. A yaw moment controlled variable calculator 21 calculates a yaw moment controlled variable corresponding to the steering state based on the various sensor signals. The purpose of this yaw moment controlled variable is to ensure responsiveness of the yaw motion of the vehicle relative to the steering operation of the drier. The control contents within the yaw moment controlled variable calculator 21 are described.

(Details of yaw moment control)

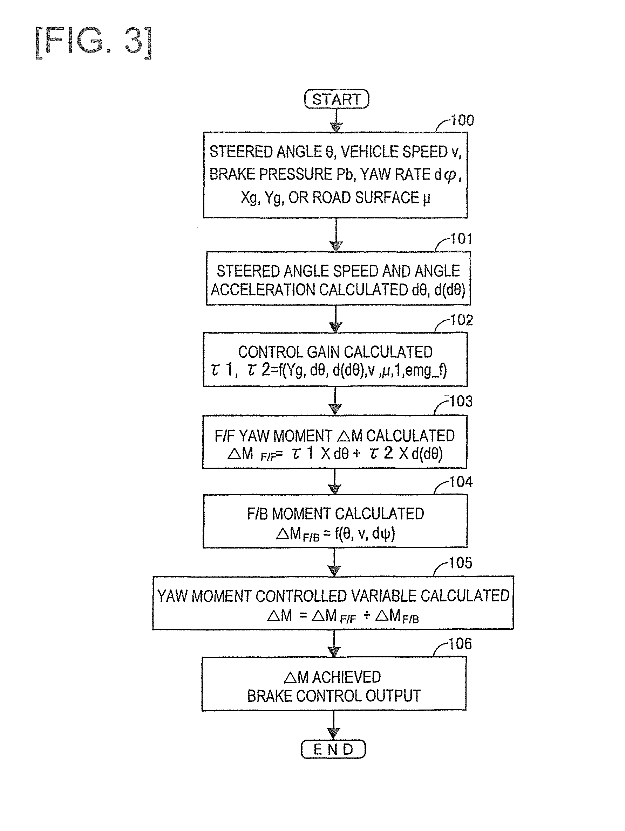

FIGS. 3 to 5 are flowcharts showing an example of the yaw moment controlled variable calculation process of Embodiment 1. This process is executed by regular interruption at constant time intervals by a non-illustrated operation system.

FIG. 3 is a flowchart depicting the yaw moment controlled variable calculation process of Embodiment 1.

In step 100, the steered angle $\theta$, the longitudinal and transverse accelerations Xg, Yg, the yaw rate $d\phi$, the vehicle speed V, the brake pressure Pb, and the road surface $\mu$ are acquired by the various sensors that depict the vehicle speed and other travel states.

In step 101, the steered angle speed $d\theta$ and the steered angle acceleration $d(d\theta)$ are calculated by differentiating and secondarily differentiating the steered angle $\theta$.

In step 102, a degree of emergency is detected from a vehicle inputted physical quantity, a driver manipulated variable, and an external view recognition sensor in steps 200 onward described hereinafter, and the occurring yaw moment gain $\tau1$ relative to the steered angle speed of corresponding feed-forward control and the occurring yaw moment gain $\tau2$ relative to the steered angle acceleration are set.

In step 103, the F/F yaw moment amount $\Delta MF/F$ resulting from feed-forward control is calculated by the following formula, using the sum of the products of the set feed-forward control gain $\tau1$ and the steered angle acceleration $d\theta$, and of $\tau2$ and the steered angle acceleration $d(d\theta)$.

$$\triangle \mathrm{MF/F} = \tau 1 \times \mathrm{d}\theta + \tau 2 \times \mathrm{d}(\mathrm{d}\theta)$$

In step 104, the deviation (or amount of change) between a target yaw rate $\mathrm{d}\phi^*$ and the actual yaw rate $\mathrm{d}\phi$ is calculated, and the F/B yaw moment amount $\triangle \mathrm{MF/B}$ required based on this calculated state quantity is calculated. These values may be used in any desired manner; for example, it is common to append a control gain that varies according to the travel state to achieve F/B control that uses the linear sum of these values.

In step 105, the yaw moment controlled variable $\triangle \mathrm{M}$, which actually occurs in the vehicle, is calculated according to the following formula from the calculated F/F yaw moment amount $\triangle \mathrm{MF/F}$ resulting from feed-forward control and the F/B yaw moment amount $\triangle \mathrm{MF/B}$ resulting from feedback control.

$$\triangle \mathrm{M} = \triangle \mathrm{MF/F} + \triangle \mathrm{MF/B}$$

This is because with only F/B control as previously described, control for making a correction is initiated after the yaw rate deviation occurs, which is therefore effective for correcting unstable behavior and for disturbance stability, but phase lag cannot be proactively improved. With only F/F control, phase lag can be improved and the effect of enhancing responsiveness can be expected by performing control in accordance with the handle operation, but with great behavioral disorder, the effect is small when the handle manipulated variable is accurate and not great. Therefore, the sum of F/F and F/B is used, whereby phase lag is proactively improved by F/F control, and stability is ensured by F/B control.

In step 106, the yaw moment controlled variable $\triangle \mathrm{M}$ is outputted to a yaw moment deceleration arbitration part 24 and a yaw moment deceleration conversion part 22.

[Setting control gain]

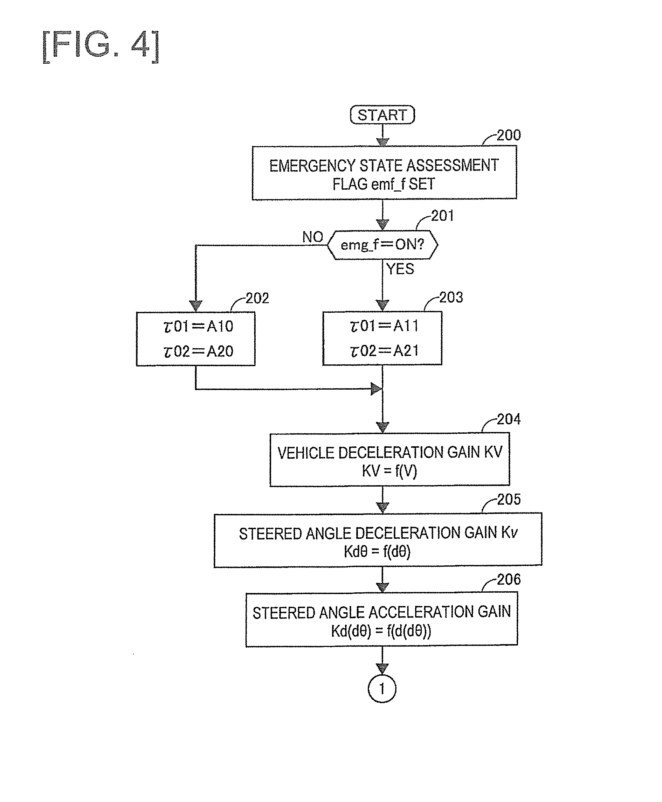

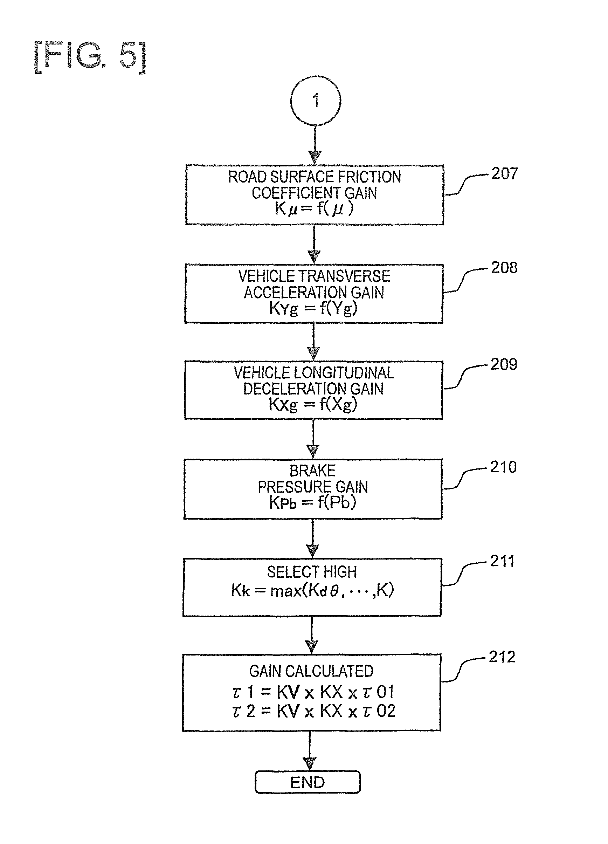

FIGS. 4 and 5 are flowcharts depicting the control gain setting process used in the yaw moment controlled variable calculation of Embodiment 1.

In step 200, an emergency state assessment flag emg_f is set. This is an emergency state assessment flag emg_f being set to ON either when an obstacle such as a stopped vehicle is detected by a laser radar or a sensor for detecting inter-vehicle distance in millimeter waves or the like, which are external view recognition sensors, and by data processing of a camera image, for example; or by oncoming obstacle information within the information from an infrastructure, found through road-vehicle communication.

In step 201, an assessment is made as to whether or not the emg_f is ON, and if an emergency state is in effect, the sequence advances to step 203 and $\tau 01$ and $\tau 02$ are set by the following formulas so that the reference control gain is comparatively large.

$$\tau 01 = A11$$

$$\tau 02 = A21$$

When the emg_f is not ON, an emergency state is not in effect, the sequence therefore advances to step 202, and $\tau 01$ and $\tau 02$ are set as follows so as to yield a reference control gain such that a normal handle operation does not have an uncomfortable deceleration G at the occurrence of the yaw moment due to the brake force.

$$\tau 01 = A10$$

$$\tau 02 = A20$$

In this case, A10 is less than A11 and A20 is less than A21.

In steps 204 to 210, a KV equivalent to the degree of emergency is set according to the vehicle travel state and the driver manipulated variable, and this KV will be a coefficient when the control gain is afterward calculated.

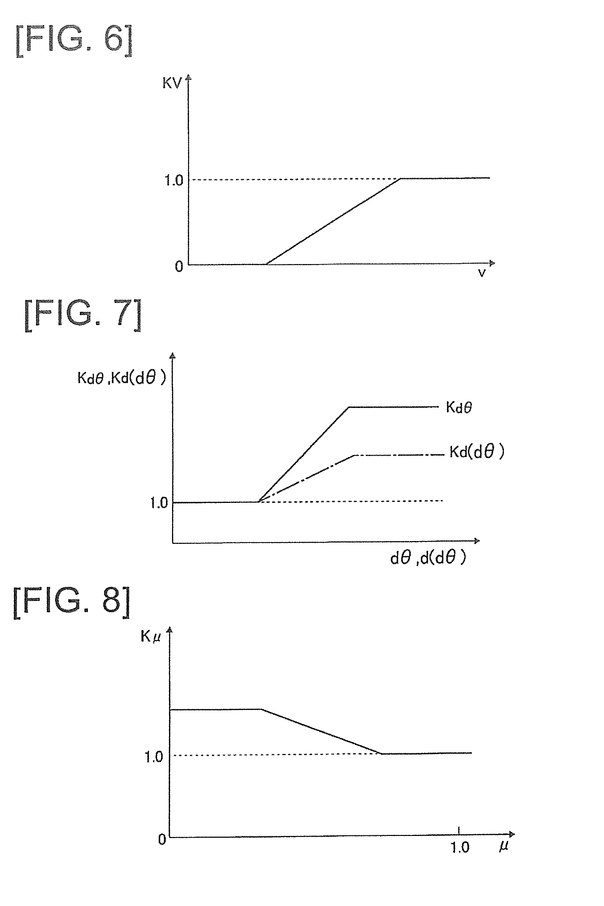

In step 204, the coefficient KV is set. FIG. 6 is a gain map depicting the control gain relative to vehicle speed in Embodiment 1. The coefficient KV pertaining to gain is set as a property such that the control gain increases according to the increase in vehicle speed v, as shown in FIG. 6. Essentially, the higher the vehicle speed, the more readily the degree of emergency approaches a danger, or the higher the degree of emergency because damage will increase.

In steps 205 and 206, coefficients $\mathrm{Kd}\theta$ and $\mathrm{Kd}(\mathrm{d}\theta)$ are set. FIG. 7 is a map depicting the relationship of these coefficients relative to the steering state in Embodiment 1. The coefficients $\mathrm{Kd}\theta$ and $\mathrm{Kd}(\mathrm{d}\theta)$ are set so as to increase as the steered angle speed $\mathrm{d}\theta$ and the steered angle acceleration $\mathrm{d}(\mathrm{d}\theta)$ increase, as shown in FIG. 7. In an emergency avoidance state, the avoidance operation is sped up as the avoidance distance becomes shorter, the driver therefore operates the handle quickly, and the degree of emergency increases according to the magnitude of the steered angle speed and the steered angle acceleration. The F/F yaw moment amount $\triangle \mathrm{MF/F}$ as pertains only to $\mathrm{d}\theta$ and $\mathrm{d}(\mathrm{d}\theta)$ increases in the manner of a quadratic curve.

In step 207, a coefficient $\mathrm{K}\mu$ is set. FIG. 8 is a map depicting the relationship of this coefficient to the road surface friction coefficient in Embodiment 1. The

coefficient K$\mu$ is set as shown in FIG. 8 in accordance with either an estimation from factors such as the longitudinal acceleration Xg and the transverse acceleration Yg, or the road surface friction coefficient $\mu$ sent from the infrastructure by road-vehicle communication. When the $\mu$ value of the road surface is small, the force that can occur in the tires is smaller than when the value is large, phase lag therefore occurs even with a small handle operation, unstable behavior occurs readily, and the degree of emergency is high. Therefore, phase compensation is needed with yaw moment control because of a comparatively slow handle operation state, the driver recognizes that the road surface is slippery and not normal, and the effect of improving the vehicle behavior can therefore be felt more so than the discomfort relating to the deceleration G.

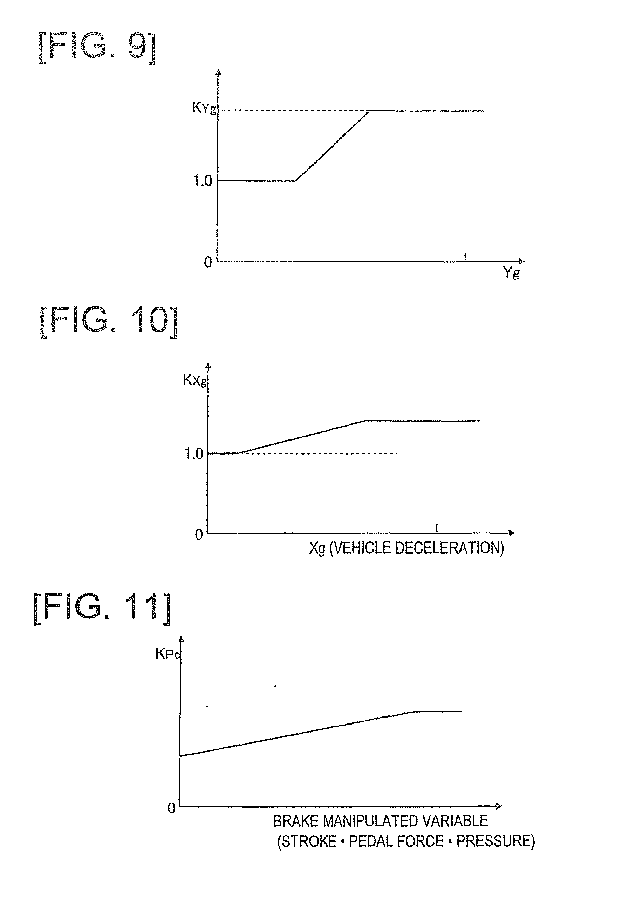

In step 208, a coefficient Kyg is set. FIG. 9 is a map depicting the relationship of this coefficient to transverse acceleration in Embodiment 1. The coefficient KYg is set so as to increase according to the transverse acceleration Yg as shown in FIG. 9. While the transverse acceleration Yg is great, there is a component in the direction of the deceleration G because of turning resistance due to cornering force during turning, and it is therefore difficult to feel any discomfort due to the deceleration G. Near the friction boundary of the tires while the vehicle is in motion, the gain must be increased for the purpose of phase compensation because phase lag is comparatively large due to the decrease in tire Cp, unstable behavior that exceeds the tire friction boundary occurs readily, and the degree of emergency is high.

In step 209, a coefficient KXg is set. FIG. 10 is a map depicting the relationship of this coefficient to longitudinal deceleration in Embodiment 1. The coefficient KXg is set so as to increase according to the longitudinal acceleration Xg as shown in FIG. 10. If deceleration increases, it becomes more difficult to perceive discomfort itself due to the deceleration G during yaw moment control through brake force, and during sudden braking with a large deceleration G, the degree of emergency is high because of the assumption of a collision or of emergency avoidance for avoiding a collision.

In step 210, a coefficient KPb is set. FIG. 11 is a map depicting the relationship of this coefficient to the brake operation state in Embodiment 1. The coefficient KPb increases according to the brake force equivalent to the brake manipulated variable of the driver, the brake operation stroke, or the brake pressure, as shown in FIG. 11. This is similar to the case of Xg in step 209.

In step 211, a coefficient KX pertaining to the degree of emergency is set by taking the maximum value of the coefficient K according to the degree of emergency of the manipulated variable or the respective states calculated in steps 205 to 211.

In step 212, the control gains $\tau1$ and $\tau2$ for ultimately calculating the yaw moment of feed-forward control are calculated by the following formulas.

$$\tau1 = KV \times KX \times \tau01$$

$$\tau2 = KV \times KX \times \tau02$$

The values $\tau01$ and $\tau02$ are set by the switching of the degree of emergency, and the degree of emergency is treated with KX at a maximum value and KV as a product, but essentially the degree of emergency is preferably in an easily expressible format (maximum, minimum, sum, product, switching).

Thus, the current degree of emergency of the vehicle, as estimated from the inputted physical quantities (steered angle $\theta$, brake pressure Pb, vehicle speed V, longitudinal acceleration Xg, transverse acceleration Yg, and yaw rate d$\phi$), is estimated and detected in step 200 to step 212, and the F/F yaw moment amount $\Delta$MF/F occurring in feed-forward control is calculated according to this degree of emergency.

When the degree of emergency is high, the deceleration G caused by the brake force is not perceived as discomfort due to the increasing of the gains $\tau1$ and $\tau2$ of the F/F yaw moment amount calculated according to the steered angle speed and the steered angle acceleration, and phase lag can be compensated by supplementing the yaw moment needed at this time. When the degree of emergency is low, it is assessed that there is no need to compensate for phase lag with the yaw rate at the time, and the deceleration G caused by the brake force can be reduced and discomfort can be avoided by reducing the gains $\tau1$ and $\tau2$. The F/B yaw moment amount $\Delta$MF/B is calculated by feedback control, and the sum of the F/B yaw moment amount $\Delta$MF/B and the F/F yaw moment amount $\Delta$MF/F calculated by feed-forward control is found, whereby feed-forward control can be used to perform phase compensation of the vehicle yaw rate caused by a sudden handle operation by the driver or the like, and the vehicle can be stabilized by feedback control relative to disturbances, severe disorder of behavior, and changes in low-$\mu$ roads or the like. Described above are the details of yaw moment control, and the yaw moment controlled variable is outputted by the above-described processes to the yaw moment deceleration conversion part 22 and the yaw moment deceleration arbitration part 24 shown in FIG. 2.

Returning to FIG. 2, the rest of the configuration is described. A deceleration Xg_m that occurs in the vehicle due to the calculated yaw moment controlled variable $\Delta$M is calculated in the yaw moment deceleration conversion part 22. Specifically, when the left-right brake force difference needed to create a yaw moment is calculated, the deceleration occurring in the vehicle is calculated as the requested deceleration Xg_m based on the summation of the left and right brake forces applied in order to obtain this brake force difference (essentially because brake force is applied to either only the left or only the right, the brake force applied to that side).

The target deceleration calculator 23 calculates a target deceleration Xg_m_t based on the requested deceleration Xg_m calculated by the yaw moment deceleration conversion part 22, and the steered angle speed $d\theta$ of the driver. Specifically, when the steered angle speed $d\theta$ increases, the target deceleration Xg_m_t also increases along with the increase in the requested deceleration Xg_m because a yaw moment must be proactively created in the vehicle. Essentially, on the increasing side, Xg_m is equal to Xg_m_t. When the steered angle speed $d\theta$ begins to decrease, the yaw moment controlled variable (i.e. the brake force difference) applied to the vehicle is controlled in a direction of decreasing, and with this decrease the requested deceleration Xg_m_t decreases as well. At this time, when the deceleration occurring in the vehicle decreases all at once, the rebound to the vehicle behavior will be great and there will be a risk of worsening the ride quality; therefore, when the steered angle speed begins to decrease, the target deceleration Xg_m_t ($\geq$ Xg_m) calculated is limited so that the rate of decrease of the requested deceleration is a predetermined value or less.

The following is a detailed description of the problems in a case in which the rate of decrease of the requested deceleration Xg_m is not limited. When the vehicle begins to turn, lateral force occurs at the bottom of the springs, and the vehicle turns while this lateral force is transmitted to the top of the springs via the suspension. When the vehicle is turning, rolling occurs in the top of the springs, the shock absorber of the suspension on the wheel inside the turn extends, and the shock absorber of the suspension on the wheel outside the turn contracts. At this time, when brake force is generated on the wheel inside the turn by yaw moment control, the friction when the shock absorber goes through a stroke increases in the wheel inside the turn on which the brake force acts, and it becomes difficult for the shock absorber to extend. When the deceleration suddenly decreases in such a state, there is a risk that the omission of longitudinal acceleration will cause the driver to feel the discomfort of the transverse acceleration increasing all at once, regardless of the transverse acceleration occurring in the vehicle being constant. In view of this, a target deceleration Xg_m_t is calculated which is limited so that the rate of decrease of the requested deceleration is a predetermined value or less, and a brake force that will achieve this target deceleration is applied, whereby the discomfort described above is dispelled and the ride quality is improved.

The yaw moment deceleration arbitration part 24 calculates the final target brake force of the wheels from both the brake force for yaw moment control of the wheels for achieving the brake force difference that will achieve the yaw moment controlled variable $\Delta M$ calculated by the yaw moment controlled variable calculator 21, and the brake force of the wheels corresponding to the deceleration needed to achieve the target deceleration Xg_m_t calculated by the target deceleration calculator 23; and controls the wheel cylinder hydraulic pressure of the wheels.

Specifically, when the steered angle speed has decreased, the target deceleration Xg_m_t increases above the requested deceleration Xg_m based on the yaw moment controlled variable. In other words, the brake force is insufficient with only brake force for generating the brake force difference based on the yaw moment controlled variable $\Delta M$. Half of the differential of the target deceleration Xg_m_t and the requested deceleration Xg_m is added to the right front wheel and half is added to the left front wheel so that this insufficiency is allotted equally between the left and right vehicle wheels. In other words, brake force for achieving the requested deceleration Xg_m is distributed to the left and right sides. For example, when the steered angle speed begins to decrease during a state in which brake force corresponding to the yaw moment controlled variable is generated in the right front wheel during a right turn and brake force is not generated in the left front wheel, brake force is also generated in the left front wheel where no brake force had been generated. In other words, when a decrease in the steered angle speed is detected, a predetermined brake force is applied to a vehicle wheel where brake force had not been applied.

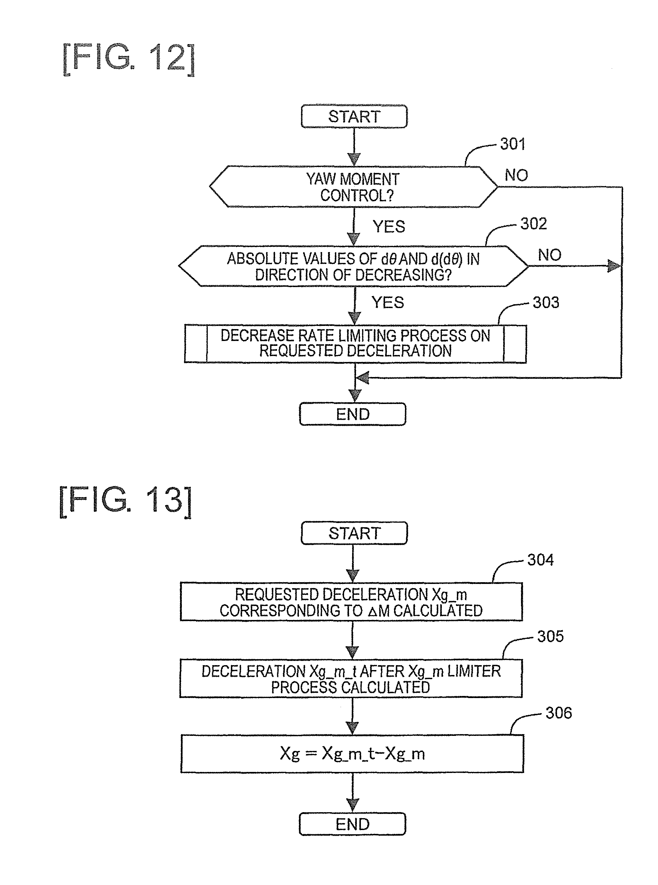

FIGS. 12 and 13 are flowcharts depicting, from the brake force control process of Embodiment 1, the contents of the deceleration limiting process in particular.

In step 301, an assessment is made as to whether or not yaw moment control is taking place, the sequence advances to step 302 when yaw moment control is taking place, and the present control flow ends when yaw moment control is not taking place.

In step 302, an assessment is made as to whether or not the absolute values of the steered angle speed $d\theta$ and the steered angle acceleration $d(d\theta)$ are moving in a direction of decreasing, and the sequence advances to step 303 when the direction is decreasing, otherwise the present control flow ends.

In step 303, a decrease rate limiting process is executed on the requested deceleration Xg_m.

(Decrease rate limiting process)

In step 304, the requested deceleration Xg_m corresponding to the yaw moment controlled variable $\Delta M$ is calculated.

In step 305, the rate of decrease of the requested deceleration Xg_m is limited to a predetermined value or less, and the target deceleration Xg_m_t after the limiting is calculated. An appropriate filtering process may be implemented on this calculation, the target deceleration may be found through another calculation process, and the calculation is not particularly limited.

In step 306, the brake force Xg1 needed to achieve the target deceleration Xg_m_t is calculated by

the following formula.

$$Xg1 = Xg\_m\_t - Xg\_m$$

In the yaw moment deceleration arbitration part 24, half of the Xg1, $1/2 \times$ Xg1, is added to the vehicle wheel brake force corresponding to the brake force difference needed to achieve the yaw moment controlled variable ΔM, and $1/2 \times$ Xg1 is also added to the vehicle wheel to which brake force is not being applied. A yaw moment is thereby applied to ensure a yaw rate in the vehicle, and a worsening of ride quality that would accompany a fluctuation in deceleration is avoided.

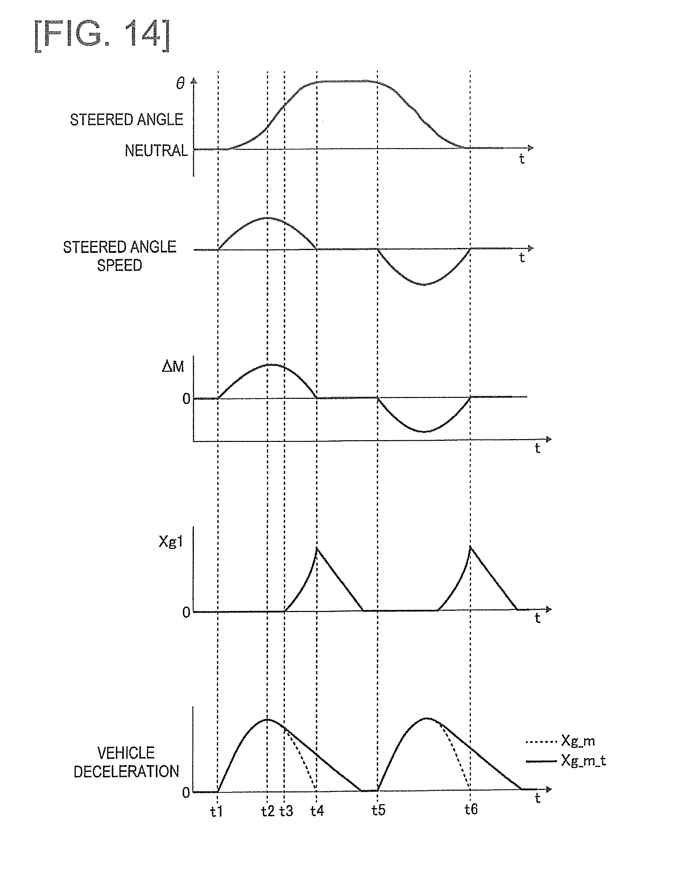

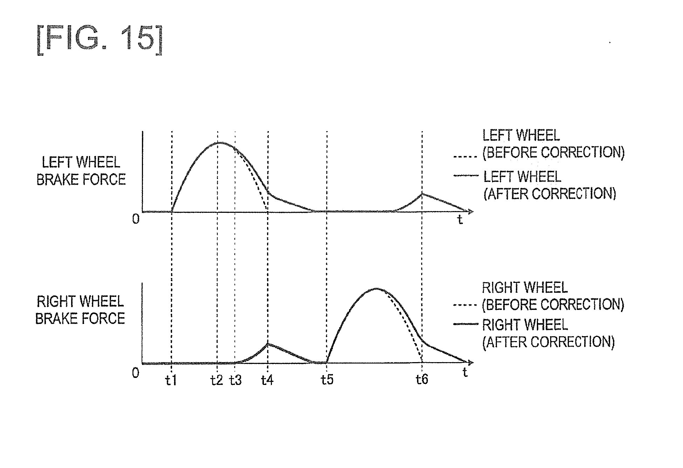

FIGS. 14 and 15 are time charts depicting the yaw moment control process in a case in which the driver steers to the left and then returns from a steer-holding state to the neutral position. FIG. 14 is a time chart depicting the relationships of the steered angle, the steered angle speed, the yaw moment controlled variable ΔM, the Xg1, the Xg_m, and the Xg_m_t, and FIG. 15 is a time chart depicting the relationships of the brake force on the left and right front wheels at the time. The times of FIG. 14 and the times of FIG. 15 are the same times.

At time t1, when the driver performs a left steering operation, the steered angle θ begins to increase, and the steered angle speed dθ also increases. The yaw moment controlled variable ΔM increases as well, and brake force corresponding to the yaw moment controlled variable ΔM is applied as brake force to the left front wheel. Because brake force is not applied to the right front wheel, the brake force applied to the left front wheel results in a brake force difference corresponding to the yaw moment controlled variable ΔM.

At time t2, when the increase in the steered angle speed dθ ends, the peak of the steered angle speed dθ is crested and the steered angle speed dθ thereafter begins to decrease.

At time t3, when a decrease in the steered angle speed dθ is confirmed, the decrease rate limiting process of the requested deceleration is performed. A brake force of $1/2 \times$ Xg1 is thereby applied to the left and right front wheels in order to ensure a deceleration of Xg1, which is the differential between the requested deceleration Xg_m corresponding to the yaw moment controlled variable ΔM and the target deceleration Xg_m_t at which the rate of decrease of the requested deceleration Xg_m is limited (see FIG. 15). In other words, sudden changes in deceleration are suppressed by applying brake force to the right front wheel where there had been no brake force.

Brake force is applied equally to the left and right front wheels after time t4, at which the brake force component corresponding to the yaw moment controlled variable ΔM reaches 0. The yaw rate occurring in the vehicle is thereby achieved as desired by the yaw moment controlled variable component, and brake force is applied to the left and right front wheels during changes in deceleration as well, whereby stable vehicle behavior is achieved. Specifically, when the brake force difference in the left and right wheels is 0 (the predetermined value or less), the brake force applied to the left and right wheels is reduced, and yaw moment is ended. Yaw moment control can thereby be ended smoothly.

At time t5, when the driver begins to return from the left-steering holding state to the neutral position, this time brake force corresponding to the yaw moment controlled variable ΔM is applied to the right front wheel (see FIG. 15). Brake force is thereafter also applied to the left front wheel by the same actions as the contents described at times t2 to t4. A yaw rate corresponding to the steering operation of the driver can thereby be produced, and sudden changes in deceleration can be suppressed.

As described above, the operational effects exemplified below are exhibited in Embodiment 1.

(1) The vehicle yaw moment control device comprises a steered angle sensor 14 and step 101 (steering state detection means) for detecting the steered angle speed dθ and the steered angle acceleration d(dθ), and the control unit 17 (brake force control means) for calculating the yaw moment controlled variable ΔM applied to the vehicle based on the steered angle speed dθ and the steered angle acceleration d(dθ) detected by step 101 and applying a brake force difference to the left and right vehicle wheels in accordance with the yaw moment controlled variable ΔM; wherein the control unit 17 applies $1/2 \times$ Xg1 (predetermined brake force) to a vehicle wheel to which brake force had not been applied when a decrease in the steered angle speed dθ is detected.

Consequently, when the brake force difference from yaw moment control decreases, sudden changes in the deceleration of the vehicle can be suppressed, and worsening of the ride quality can be avoided by stabilizing the vehicle behavior.

(2) The control unit 17 distributes $1/2 \times$ Xg1 to the left and right vehicle wheels. Consequently, deceleration can be produced without producing a yaw moment in the vehicle.

(3) When the steered angle speed dθ has decreased, the control unit 17 applies Xg1 (the predetermined brake force) so that the rate of decrease in the deceleration of the vehicle is a predetermined value or less, or in other words, the control unit applies the differential between the requested deceleration Xg_m and the target deceleration Xg_m_t.

Consequently, the desired yaw moment can be applied, and it is possible to avoid the discomfort of transverse acceleration increasing all at once due to the omission of longitudinal acceleration.

(4) The control unit 17 reduces the yaw moment controlled variable ΔM (the brake force difference) as the absolute value of the steered angle speed dθ approaches zero. Consequently, a yaw rate conforming to the intention of the driver can be produced in the vehicle, turning performance resulting from the yaw rate can be achieved, and worsening of the ride quality can be avoided by suppressing sudden increases in deceleration.

(5) The control unit 17 reduces the brake force on the left and right wheels and ends yaw moment control when the brake force difference on the left and right wheels is a predetermined value or less. Consequently, sudden increases in deceleration can be suppressed, worsening of the ride quality can be avoided, and yaw moment control can be ended smoothly.

The above description was based on Embodiment 1, but the present invention is not limited to Embodiment 1 and can be applied to other configurations. For example, a predetermined brake force was applied to the left and right wheels in Embodiment 1, but another option is that the predetermined brake force be applied only to the vehicle wheel to which there had been no application of brake force equivalent to the brake force difference corresponding to the yaw moment controlled variable ΔM. The configuration was also designed such that brake force is applied only to the front wheels, but the configuration may be designed such that brake force is applied to a plurality of wheels. The brake force control device is also not limited to the device employed in Embodiment 1, and if the configuration is designed such that the brake force on the wheels can be controlled regardless of the brake pedal operation by the driver, there would be no particular problems even with a brake-by-wire system or a vehicle behavior control adapting brake system.

## Claims

1. A vehicle yaw moment control device **characterized by** comprising:

   a steering state detection means for detecting steered angle speed and steered angle acceleration; and
   a brake force control means for calculating a yaw moment controlled variable applied to the vehicle based on a signal detected by the steering state detection means and applying a brake force difference to the left and right vehicle wheels in accordance with the yaw moment controlled variable; wherein
   the brake force control means applies a predetermined brake force to a vehicle wheel to which brake force had not been applied when a decrease in the steered angle speed is detected.

2. The vehicle yaw moment control device according to claim 1, **characterized in that**:

   the brake force control means distributes the predetermined brake force to the left and right vehicle wheels.

3. The vehicle yaw moment control device according to claim 1 or 2, **characterized in that**:

   when the steered angle speed has decreased, the brake force control means applies the predetermined brake force so that the rate of decrease in the deceleration of the vehicle is a predetermined value or less.

4. The vehicle yaw moment control device according to any of claims 1 to 3, **characterized in that**:

   the brake force control means reduces the brake force difference as the absolute value of the steered angle speed approaches zero.

5. The vehicle yaw moment control device according to claim 4, **characterized in that**:

   the brake force control means reduces the brake force on the left and right wheels and ends yaw moment control when the brake force difference on the left and right wheels is a predetermined value or less.

6. A vehicle yaw moment control device comprising:

   a sensor for detecting steered angle speed and steered angle acceleration; and
   a controller for calculating a yaw moment controlled variable to be applied to the vehicle based on the steered angle speed and steered angle acceleration detected by the sensor, applying a brake force difference of left and right vehicle wheels corresponding to the yaw moment controlled variable, and applying a predetermined brake force to a vehicle wheel to which brake force had not been applied when a decrease in the steered angle speed is detected.

[FIG. 1]

[FIG. 2]

## [FIG. 3]

```
                    ┌─────────┐
                    │  START  │
                    └─────────┘
                         │
                         ▼                       ┌─100
        ┌──────────────────────────────────────┐
        │ STEERED ANGLE θ, VEHICLE SPEED v,     │
        │ BRAKE PRESSURE Pb, YAW RATE dφ,       │
        │ Xg, Yg, OR ROAD SURFACE μ             │
        └──────────────────────────────────────┘
                         │
                         ▼                       ┌─101
        ┌──────────────────────────────────────┐
        │ STEERED ANGLE SPEED AND ANGLE         │
        │ ACCELERATION CALCULATED dθ, d(dθ)     │
        └──────────────────────────────────────┘
                         │
                         ▼                       ┌─102
        ┌──────────────────────────────────────┐
        │     CONTROL GAIN CALCULATED           │
        │ τ1, τ2=f(Yg, dθ, d(dθ),v ,μ,1,emg_f)  │
        └──────────────────────────────────────┘
                         │
                         ▼                       ┌─103
        ┌──────────────────────────────────────┐
        │ F/F YAW MOMENT △M CALCULATED          │
        │  △M F/F= τ1 X dθ + τ2 X d(dθ)         │
        └──────────────────────────────────────┘
                         │
                         ▼                       ┌─104
        ┌──────────────────────────────────────┐
        │      F/B MOMENT CALCULATED            │
        │      △M F/B = f(θ, v, dψ)             │
        └──────────────────────────────────────┘
                         │
                         ▼                       ┌─105
        ┌──────────────────────────────────────────┐
        │ YAW MOMENT CONTROLLED VARIABLE CALCULATED │
        │      △M = △M F/F + △M F/B                 │
        └──────────────────────────────────────────┘
                         │
                         ▼                       ┌─106
        ┌──────────────────────────────────────┐
        │          △M ACHIEVED                  │
        │      BRAKE CONTROL OUTPUT             │
        └──────────────────────────────────────┘
                         │
                         ▼
                    ┌─────────┐
                    │  E N D  │
                    └─────────┘
```

[FIG. 4]

START

↓

EMERGENCY STATE ASSESSMENT
FLAG emf_f SET ⌐200

↓

NO ← ⟨ emg_f＝ON? ⟩ ⌐201

YES ↓

τ01＝A10
τ02＝A20 ⌐202

τ01＝A11
τ02＝A21 ⌐203

↓

VEHICLE DECELERATION GAIN KV
KV = f(V) ⌐204

↓

STEERED ANGLE DECELERATION GAIN Kv
Kdθ = f(dθ) ⌐205

↓

STEERED ANGLE ACCELERATION GAIN
Kd(dθ) = f(d(dθ)) ⌐206

↓

①

[FIG. 5]

```
                    ( 1 )
                     │
                     ▼
    ┌─────────────────────────────┐
    │  ROAD SURFACE FRICTION       │──── 207
    │  COEFFICIENT GAIN            │
    │  Kμ = f(μ)                   │
    └─────────────────────────────┘
                     │
                     ▼
    ┌─────────────────────────────┐
    │  VEHICLE TRANSVERSE          │──── 208
    │  ACCELERATION GAIN           │
    │  KYg = f(Yg)                 │
    └─────────────────────────────┘
                     │
                     ▼
    ┌─────────────────────────────┐
    │  VEHICLE LONGITUDINAL        │──── 209
    │  DECELERATION GAIN           │
    │  KXg = f(Xg)                 │
    └─────────────────────────────┘
                     │
                     ▼
    ┌─────────────────────────────┐
    │  BRAKE                       │──── 210
    │  PRESSURE GAIN               │
    │  KPb = f(Pb)                 │
    └─────────────────────────────┘
                     │
                     ▼
    ┌─────────────────────────────┐
    │  SELECT HIGH                 │──── 211
    │  Kk = max(Kdθ, ···, K)       │
    └─────────────────────────────┘
                     │
                     ▼
    ┌─────────────────────────────┐
    │  GAIN CALCULATED             │──── 212
    │  τ1 = KV × KX × τ01          │
    │  τ2 = KV × KX × τ02          │
    └─────────────────────────────┘
                     │
                     ▼
                ┌─────────┐
                │   END   │
                └─────────┘
```

[FIG. 6]

[FIG. 7]

[FIG. 8]

[FIG. 9]

[FIG. 10]

[FIG. 11]

[FIG. 12]

```
                    ┌─────────┐
                    │  START  │
                    └────┬────┘
                         │                    ┌── 301
              ┌──────────▼──────────┐          NO
             ◁      YAW MOMENT       ▷──────────────┐
              ◁     CONTROL?        ▷               │
                    │   YES              ┌── 302     │
                    │                               │
          ┌─────────▼────────────────┐    NO        │
         ◁  ABSOLUTE VALUES OF dθ AND d(dθ) IN ▷─────┤
          ◁  DIRECTION OF DECREASING?    ▷           │
                    │   YES           ┌── 303        │
          ┌─────────▼────────────────────┐          │
          │ DECREASE RATE LIMITING PROCESS ON │      │
          │      REQUESTED DECELERATION       │      │
          └─────────┬────────────────────┘          │
                    │◄──────────────────────────────┘
                ┌───▼───┐
                │  END  │
                └───────┘
```

[FIG. 13]

```
                    ┌─────────┐
                    │  START  │
                    └────┬────┘
                         │                    ┌── 304
          ┌──────────────▼──────────────┐
          │    REQUESTED DECELERATION Xg_m    │
          │  CORRESPONDING TO ΔM CALCULATED   │
          └──────────────┬──────────────┘
                         │                    ┌── 305
          ┌──────────────▼──────────────┐
          │  DECELERATION Xg_m_t AFTER Xg_m LIMITER │
          │       PROCESS CALCULATED          │
          └──────────────┬──────────────┘
                         │                    ┌── 306
          ┌──────────────▼──────────────┐
          │        Xg = Xg_m_t−Xg_m          │
          └──────────────┬──────────────┘
                    ┌───▼───┐
                    │  END  │
                    └───────┘
```

[FIG. 14]

[FIG. 15]

LEFT WHEEL BRAKE FORCE

LEFT WHEEL (BEFORE CORRECTION)

LEFT WHEEL (AFTER CORRECTION)

RIGHT WHEEL BRAKE FORCE

RIGHT WHEEL (BEFORE CORRECTION)

RIGHT WHEEL (AFTER CORRECTION)

## INTERNATIONAL SEARCH REPORT

| International application No. |
|---|
| PCT/JP2013/056454 |

**A. CLASSIFICATION OF SUBJECT MATTER**
*B60T8/1755*(2006.01)i

According to International Patent Classification (IPC) or to both national classification and IPC

**B. FIELDS SEARCHED**

Minimum documentation searched (classification system followed by classification symbols)
B60T8/1755

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-145035 A  (Honda Motor Co., Ltd.),<br>22 May 2002 (22.05.2002),<br>claims 1 to 10; paragraphs [0001] to [0064];<br>all drawings<br>(Family: none) | 1,6<br>2-5 |
| A | JP 8-127258 A  (Nissan Motor Co., Ltd.),<br>21 May 1996 (21.05.1996),<br>entire text; all drawings<br>(Family: none) | 1-6 |
| A | EP 2366595 A1  (Toyota Jidosha Kabushiki Kaisha),<br>21 September 2011 (21.09.2011),<br>entire text; all drawings<br>& US 2011/0238268 A1     & WO 2010/070738 A1<br>& CN 102245449 A | 1-6 |

☐ Further documents are listed in the continuation of Box C.　　☐ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>21 May, 2013 (21.05.13) | Date of mailing of the international search report<br>04 June, 2013 (04.06.13) |
|---|---|
| Name and mailing address of the ISA/<br>　Japanese Patent Office | Authorized officer |
| Facsimile No. | Telephone No. |

Form PCT/ISA/210 (second sheet) (July 2009)

**EP 2 824 004 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001080491 A